# FASCICULE DE BREVET EUROPEEN

(11) **EP 3 356 121 B1**
(45) Date de publication et mention de la délivrance du brevet: **28.10.2020**
(21) Numéro de dépôt: 16785241.7
(22) Date de dépôt: 29.09.2016
(51) Int. Cl.: B29C 64/129, B29C 64/386, B33Y 10/00, B33Y 30/00, B33Y 50/00, B29C 64/286

(54) **PROCÉDÉ DE FABRICATION D'UN PRODUIT PAR EMPILEMENT DE COUCHE DE MATIÈRE**
VERFAHREN ZUR HERSTELLUNG EINES PRODUKTS DURCH STAPELN VON MATERIALSCHICHTEN
METHOD FOR PRODUCING A PRODUCT BY STACKING LAYERS OF MATERIAL

(30) Priorité: 29.09.2015 FR 1559173
(43) Date de publication de la demande: 08.08.2018
(73) Titulaire: Prodways, 78130 Les Mureaux (FR)
(72) Inventeur: ALLANIC, André-Luc, 78270 Mousseaux-Sur-Seine (FR)
(74) Mandataire: Santarelli
(86) Numéro de dépôt international: PCT/FR2016/052468
(87) Numéro de publication internationale: WO 2017/055747

(56) Documents cités:
- EP-A1- 1 344 633
- WO-A1-2005/106588
- WO-A1-2014/095864
- US-B1- 6 180 050

## Description

### DOMAINE TECHNIQUE DE L'INVENTION

La présente invention se rapporte d'une façon générale à la fabrication d'un produit mis en oeuvre par un système de fabrication par empilement de couches de matière. Plus précisément, l'invention concerne la détermination d'un motif d'affichage d'un masque dans un procédé de fabrication par empilement de couches de matière.

On connaît des procédés de fabrication de produits (typiquement des prototypes) en trois dimensions par empilement de couches de matière, comme par exemple par stéréolithographie. Ces procédés reposent sur la projection au moyen d'une lumière à haute énergie d'une image de projection sur une surface de travail d'une couche de matière photo-réactive, par exemple de la résine. La partie de la couche de matière exposée à la lumière se solidifie : une couche de l'objet est fabriquée.

Cette couche fabriquée est ensuite recouverte de matière photo-réactive, par exemple en abaissant un support sur lequel repose la couche fabriquée, et une nouvelle projection permet de fabriquer une nouvelle couche, empilée sur la précédente. La répétition de ces étapes permet la fabrication d'un objet par empilement de couches.

Certains procédés ont été proposés dans lesquels le motif de l'image de projection est produite en commandant directement l'allumage ou non de diodes électroluminescentes. Le brevet US 6,180,050 présente un tel procédé, dans lequel la lumière émise par des diodes électroluminescentes, convoyée par un faisceau de fibres optiques, forme l'image de projection. Toutefois, un tel procédé présente une faible résolution spatiale. De plus, dans le procédé proposé, le motif est recalculé lorsque la tête d'illumination a avancé sur une longueur correspondant à la taille d'une embouchure d'une fibre optique. Le re-calcul du motif et la transmission des données en résultant aux organes de commande empêche d'obtenir une résolution et/ou une vitesse satisfaisante.

Le plus souvent, l'image de projection est produite au moyen d'un masque adapté pour obturer la lumière émise par la source lumineuse selon un motif d'affichage. Par ailleurs, afin de pouvoir augmenter la résolution de la fabrication ou de pouvoir travailler sur une grande surface de travail, par exemple pour pouvoir réaliser des produits de grande taille, le système peut comprendre des moyens de déplacement de l'image de projection sur la surface de travail dans une direction de défilement. Le défilement permet de s'affranchir du problème de la jonction de projections adjacentes qui se pose lors de la juxtaposition de plusieurs sources lumineuses dont les projections recouvrent la surface de travail, puisque se pose alors le problème de la jonction de ces projections adjacentes.

Un exemple de masque mettant en oeuvre une technologie de traitement numérique de la lumière, mieux connue sous l'acronyme anglais de DLP pour "Digitial Light processing", repose sur l'utilisation de miroirs orientables. Chaque miroir peut prendre deux orientations différentes : soit il permet à la lumière de la source lumineuse d'atteindre la surface de travail, c'est l'état passant, soit il réfléchit cette lumière dans une autre direction vers un absorbeur, et c'est alors l'état bloquant.

Le brevet US 5 247 180 présente un tel système. En référence aux figures 1 et 2 tirées de ce brevet, un exemple de système de fabrication peut comprendre :
- un dispositif d'éclairage 1 comprenant une source lumineuse 11 et un masque 12 adapté pour obturer la lumière émise par la source lumineuse selon un motif d'affichage pour créer une image de projection 4, complété par d'éventuels dispositifs optiques 13, 14 tels que lentilles et objectifs,
- un réceptacle 3 agencé pour contenir une couche de matière présentant une surface de travail 31 exposée à l'image de projection 4 émise par le dispositif d'éclairage 1,
- des moyens 2 de déplacement de l'image de projection 4 sur la surface de travail 31 dans au moins une direction de défilement, comprenant ici une première tige de guidage 21 associée à une première vis 22 pour porter et déplacer le dispositif d'éclairage 1 dans une première direction x par rapport à la surface de travail 31, la première tige de guidage 21 et la première vis 22 étant eux-mêmes portées par une seconde tige de guidage 23 associée à une seconde vis 24 pour déplacer le dispositif d'éclairage 1 dans une seconde direction y par rapport à la surface de travail 31.

Le motif d'affichage présenté par le masque est modifiable afin de pouvoir former une image projetée désirée. De fait, le motif d'affichage doit être modifié pour changer l'image de projection en fonction du déplacement de l'image de projection comme dans le cas du défilement de celle-ci à la surface de travail 31, puisque le motif de cette image doit correspondre au motif désiré pour la partie de la surface de travail 31 alors éclairée. A cet effet, une mémoire de stockage comporte un motif de référence, préalablement déterminé par des moyens de calcul, et qui correspond à la projection désirée sur l'ensemble de la surface de travail 31.

Par exemple, la demande de brevet EP 1344633 décrit un procédé de fabrication par stéréo-lithographie tridimensionnelle, dans lequel une image est projetée sur une résine, l'image étant formée au moyen d'un masque dont le motif d'affichage peut varier avec le mouvement du masque. Des données sont stockées dans une mémoire et mettent à jour continument le motif d'affichage. Toutefois, la mise à jour du motif d'affichage peut être problématique, notamment en termes de ressource, et la simple prise en compte du défilement du motif en fonction de l'avancement du masque ne permet pas de prendre en compte toute les changements à apporter au motif d'affichage.

Par exemple, la demande de brevet WO 2014/095864 décrit un procédé de prototypage rapide dans lequel il est prévu une homogénéisation de la quantité de lumière projetée sur la résine en modulant le nombre de pixels allumés en fonction de la place des pixels dans une étendue lumineuse. Cependant, il s'agit simplement de prévoir, de façon statique, de ne pas illuminer certains pixels au centre de l'image, ce qui ne permet aucune prise en compte du défilement du motif en fonction de l'avancement du masque.

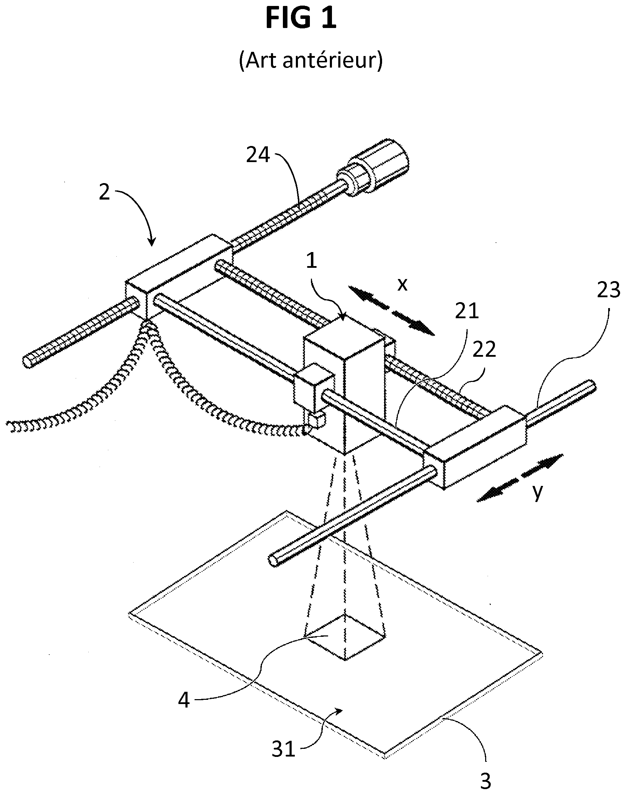

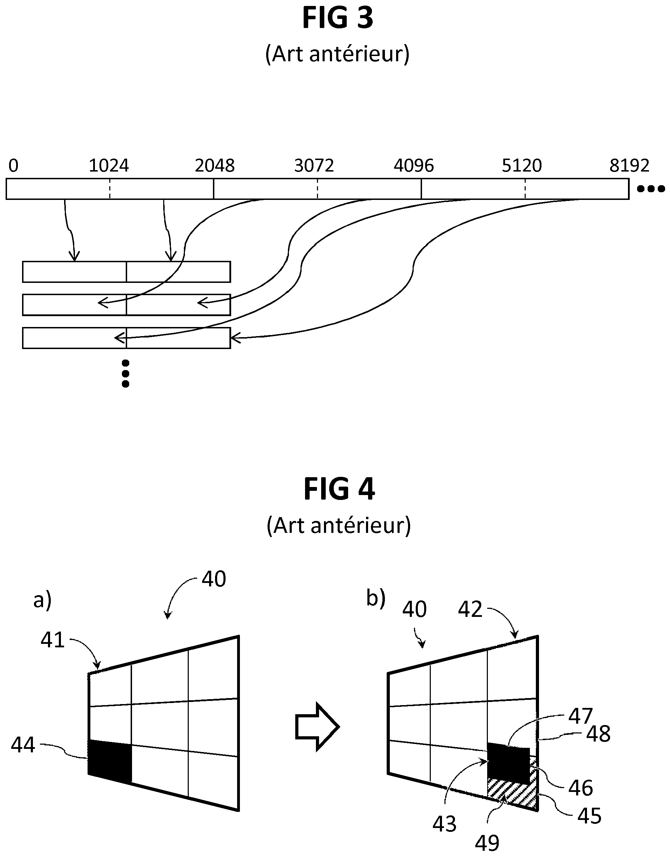

Prenant un autre exemple plus précis, et comme illustré sur la figure 3, un motif de référence se présente sous la forme de données numériques ordonnées selon les lignes que doit afficher le motif d'affichage. Ces données codent l'état des miroirs du masque, c'est-à-dire leur orientation. Il y a donc une correspondance entre les données du motif de référence, le motif du masque, et de donc de l'image projetée. En effet, en référence à la figure 1, le défilement dans la direction x de l'image de projection 4 à la surface de travail 31 se traduit par le décalage lignes par lignes dans la direction x des pixels affichés par le motif d'affichage.

Par exemple, en raison de ce défilement, pour un point donné sur la surface de travail 31 correspond initialement un pixel xᵢ, yᵢ du masque 12, qui se traduit par une projection ou non de lumière sur ledit point en fonction de l'état du pixel (passant ou obturant). En raison du défilement, un décalage d'une ligne de pixels s'opère dans la direction x. Par conséquent, c'est le pixel xᵢ₋₁,y qui correspond alors à ce même point sur la surface de travail 31.

La conservation de la projection sur ce point de la surface de travail 31 implique que les états des pixels du masque 12 doivent être décalé d'un pixel dans la direction - x, et donc que le motif d'affichage doit être décalé d'un pixel dans la direction -x. Une nouvelle ligne dans la direction y est donc introduite. Ainsi, la lecture de la mémoire au cours du défilement se fait ligne par ligne.

Plus précisément, la mémoire est lue par blocs, un bloc correspondant à une ligne. Un pointeur, c'est-à-dire la variable contenant l'adresse mémoire, indique le début de la lecture du motif d'affichage, le motif d'affichage étant alors la partie du motif de référence enregistré par la mémoire dont le début est pointé par le pointeur. Lors du défilement, un décalage d'une ligne signifie que le pointeur est décalé du nombre de bits correspondant à la longueur du bloc.

Dans l'exemple de la figure 3, une ligne du motif se compose de 2048 bits. Par conséquent, un décalage d'une ligne du motif se traduit par un saut de 2048 bits dans l'adresse mémoire du pointeur correspondant au début de la lecture du motif. Ainsi, lors du défilement, à chaque déplacement du masque correspondant à un pixel projeté, le pointeur est décalé de 2048 bits.

L'image de référence enregistrée dans la mémoire ne correspond pas exactement à celle de la consigne, c'est-à-dire à l'image dont on souhaite obtenir la projection sur la surface de travail. En effet, en pratique le fonctionnement de tout système présente des imperfections, telles que la flexion des supports ou les tolérances de fabrication, qui, bien que légères, se traduisent par des déviations de pointés (défaut d'alignement entre un point projeté et le point cible sur la surface de travail), nuisant à la qualité des produits fabriqués.

Il est donc nécessaire de corriger ces déformations. A cet effet, le motif affiché par le masque est déformé par rapport à l'image de consigne pour corriger la déformation de projection. Le motif de référence stocké dans la mémoire et lu par le dispositif d'affichage du masque est à cet effet corrigé avant son enregistrement afin de compenser les déformations induites par le système de projection.

Cependant, dans le cas d'un tel défilement, la déformation de l'image projetée évolue avec le défilement, et le motif affiché par le masque devient progressivement moins adapté à la correction requise. La figure 4 illustre ce phénomène. Sur la figure 4 est illustrée une image de projection 40 se déplaçant sur la surface de travail selon deux états a) et b). L'image est déformée par la projection et comporte des droites sécantes mettant en évidence cette déformation, délimitant neuf zones de l'image. Ces zones d'images sont déformées différemment les unes des autres et ne se superposent pas.

Dans le premier état a), une ombre projetée 44 correspond à la zone inférieure de la première colonne 41 de l'image 40. La déformation de cette ombre projetée 44 correspond à celle de la zone inférieure, de sorte que l'ombre projetée remplit toute cette zone inférieure. Lors du défilement de l'image projetée, cette ombre, qui doit rester fixe sur la surface de travail, est décalée sur la droite de l'image projetée.

A la suite du défilement de l'image de projection, lors de l'état b), l'ombre projetée 45 correspond à la zone inférieure de la dernière colonne 42. Or, l'aire de la zone inférieure de la dernière colonne 42 ne correspond pas exactement à celle de la zone inférieure de la première colonne 42. Par conséquent, l'ombre projetée 45 lors de cette étape b), représentée par des hachures, ne correspond pas à la région 46 de la surface de travail sur laquelle l'ombre 44 a été projetée lors de l'étape a). On constate que d'une part que la région 46, qui devrait rester ombragée, voit sa partie supérieure 47 éclairée par la zone centrale 48 de la dernière colonne 42, et que d'autre part l'ombre projetée 45 s'étend en partie sur une région 49 de la surface de travail qui n'a pas été ombragée par l'ombre 44 dans l'étape a). Il s'agit pourtant de la même zone inférieure qui a été décalée lors du défilement, et qui aurait dû conserver le même ombrage. On a donc, pour deux étapes de déplacement, des régions 47, 49 qui n'ont subi qu'un ombrage, tandis qu'une région 43 correspondant à la superposition des ombres projetées 44 et 46 a subi deux ombrages. De fait, l'évolution de la déformation de l'image due au défilement a rendu progressivement inadaptée la compensation qui était initialement adaptée.

Certains systèmes sont particulièrement exposés à ces problèmes. Ainsi, dans certaines configurations, le dispositif d'éclairage émettant la lumière projetée est sensiblement éloigné de la surface de travail, avec une distance de l'ordre de quelques centimètres, par exemple d'au moins 5 cm.

Grâce à cet éloignement, le dispositif d'éclairage est moins sensible aux éclaboussures et moins susceptible de collision avec d'autres éléments tels que les racleurs qui permettent la mise en place de la nouvelle couche de matière sur la couche fabriquée. On peut alors utiliser les racleurs sans avoir besoin de déplacer le dispositif d'éclairage. De plus, cet éloignement permet d'élargir la zone de la surface de travail éclairée par l'image de projection.

Cependant, cette distance exacerbe les déformations de la projection lumineuse sur la surface de travail. En effet, l'amplitude des déformations étant augmentée par la distance entre le dispositif d'éclairage et la surface de travail, ces déformations deviennent rapidement prohibitives.

La publication WO 2005/106588 A1 divulgue les caractéristiques techniques suivant le préambule de la revendication 1.

### PRESENTATION DE L'INVENTION

L'invention a pour but de remédier au moins en partie à ces inconvénients et préférentiellement à tous, en adaptant au fur et à mesure du défilement le motif d'affichage pour compenser la déformation propre à ce stade d'affichage.

Il est proposé un procédé, suivant la revendication 1, de fabrication d'un produit mis en oeuvre par un système de fabrication par empilement de couche de matière.

Le procédé est avantageusement complété par les caractéristiques suivantes, prises seules ou en quelconque de leurs combinaisons techniquement possibles:
- le déplacement de l'image de projection dans la direction de défilement se fait de manière continue;
- les critères relatifs au déplacement de l'image de projection comprennent des distances parcourues par l'image de projection dans la direction de défilement;
- le motif d'affichage est déterminé à partir d'un même motif de référence pendant une distance de défilement associée audit motif de référence;
- la distance de défilement associé à un motif de référence correspond à un décalage du motif d'affichage correspondant à un nombre de pixels compris entre 2 et 100, et de préférence compris entre 2 et 40, et de préférence encore compris entre 5 et 15;
- les distances de défilement associées à différents motifs de référence sont identiques;
- le motif de référence comporte une séquence d'états de pixel organisés en lignes correspondant à des lignes du motif d'affichage, et la partie utilisée dudit motif de référence correspond aux lignes affichées par le motif d'affichage, dans lequel la partie utilisée du motif de référence est adressée au moyen d'un pointeur d'adresse mémoire, dans lequel l'adresse mémoire dudit pointeur étant décalée d'un nombre de bits correspondant à la taille d'une ligne du motif de référence pendant la mise à jour du motif d'affichage à partir d'un même motif de référence, et d'un nombre de bits différent de la taille d'une ligne du motif de référence lors de la sélection d'un nouveau motif de référence;
- pour chacun des motifs de référence, ledit motif de référence est préalablement construit à partir d'un motif de consigne, ledit motif de consigne correspondant au motif souhaité pour l'image de projection, en appliquant audit motif de consigne un filtre de compensation inverse d'une déformation entre le motif d'affichage et l'image de projection pour un avancement de défilement donné;
- le motif de référence est associé audit avancement de défilement, et le motif d'affichage est déterminé à partir dudit motif de référence lorsque l'avancement du défilement correspond audit avancement de défilement donné;
- le procédé comprend une étape préalable de mesure, au moyen d'un imageur sur lequel est projetée l'image de projection, de la déformation entre le motif d'affichage et l'image de projection par la comparaison entre le motif d'affichage et l'image de projection acquise par ledit imageur pour ledit avancement de défilement donné;
- la fréquence de changement de motif de motif de référence est déterminée par ladite comparaison entre le motif d'affichage et l'image de projection (4) acquise par ledit imageur.
- le motif de référence à partir duquel est déterminé le motif d'affichage du masque est sélectionné parmi la pluralité de motifs de référence au moins en fonction de critères temporels, et au cours du déplacement de l'image de projection, les critères temporels de projection comprennent l'écoulement d'une durée donnée inférieure à une durée correspondant à un déplacement de l'image de projection sur une distance correspondant à un demi-pixel sur la surface de travail;
- plusieurs motifs de référence sont utilisés pour déterminer le motif d'affichage au cours de ladite durée inférieure à une durée correspondant à un déplacement de l'image de projection sur une distance correspondant à un demi-pixel sur la surface de travail, et au moins un desdits motif de référence est un motif de compensation de l'inhomogénéité de l'éclairage par la source lumineuse, ledit motif de compensation présentant une répartition spatiale des états des pixels est caractérisée par une proportion plus importante de pixels à l'état bloquant au centre dudit motif que dans sa périphérie;
- plusieurs motifs de référence sont utilisés pour déterminer le motif d'affichage au cours de ladite durée inférieure à une durée correspondant à un déplacement de l'image de projection sur une distance correspondant à un demi-pixel sur la surface de travail, et au moins un desdits motif de référence est un motif d'équilibrage dont des états de pixels sont déterminés par les états des pixels adjacents auxdits pixels dans un autre desdits motifs de référence;
- plusieurs motifs de référence sont utilisés pour déterminer le motif d'affichage pendant une partie du déplacement au cours de laquelle l'image de projection est fixe sur la surface de travail, lesdits motifs de référence définissant des motifs d'affichage respectifs se distinguant les uns des autres par un décalage progressif dans la direction de défilement de la zone obturée constituée par des lignes de pixels à l'état bloquant.

Il est également proposé un système de fabrication, suivant la revendication 17, par empilement de couches de matière.

L'invention concerne également un produit programme d'ordinateur suivant la revendication 16.

### PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels:
- la figure 1 présente une vue d'ensemble d'un système de fabrication par empilement de couche de matière de l'état de la technique,
- la figure 2 présente un exemple de dispositif d'éclairage selon l'état de la technique,
- la figure 3 est un schéma illustrant la lecture de la mémoire pour reconstruire le motif d'affichage,
- la figure 4 est un schéma illustrant les évolutions de la déformation de l'image de projection de l'image de projection lors du défilement,
- les figures 5a et 5b illustrent schématiquement la lecture de deux motifs de référence au cours du défilement selon un mode de réalisation possible de l'invention,
- la figure 6 illustre schématiquement la lecture de deux motifs de référence au cours du défilement selon un mode de réalisation possible de l'invention,
- la figure 7 illustre schématiquement la lecture de deux motifs de référence au cours du temps selon un mode de réalisation possible de l'invention,
- les figures 8a et 8b illustrent schématiquement l'évolution de la vitesse de déplacement du masque et des durées d'éclairement en fonction de la position du masque dans le défilement,
- la figure 9 illustre schématiquement différentes étapes d'un exemple de mise à jour du motif de référence en fonction du temps au moment du début du défilement du masque,
- la figure 10 illustre schématiquement la détermination du motif d'affichage à partir de plusieurs motifs de référence dans les étapes de la figure 9.

### DESCRIPTION DETAILLEE

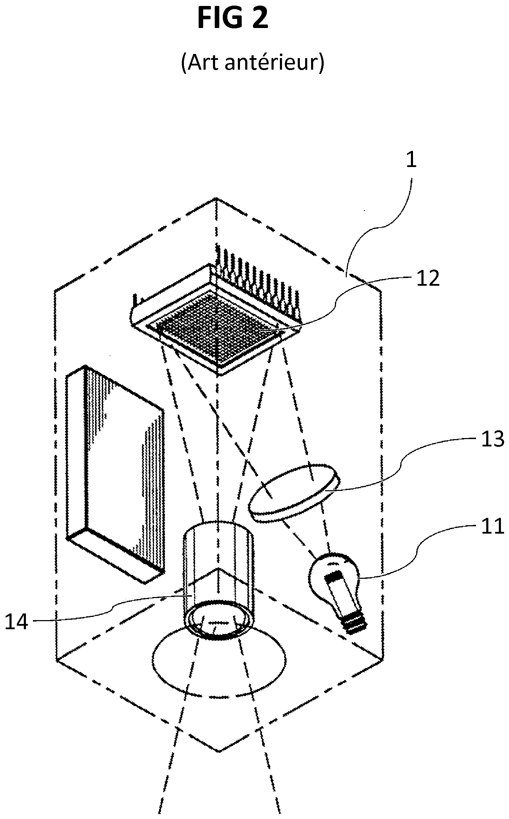

Le procédé de fabrication selon l'invention est mis en oeuvre par un système de fabrication par empilement de couche. Le système présenté dans les figures 1 et 2 sera pris en tant qu'exemple non limitatif pour la description qui suit.

Ainsi, le système de fabrication par empilement de couche de matière comprend:
- un dispositif d'éclairage 1 comprenant une source lumineuse 11 et un masque 12 adapté pour obturer la lumière émise par la source lumineuse 11 selon un motif d'affichage pour créer une image de projection 4,
- un réceptacle 3 agencé pour contenir une couche de matière présentant une surface de travail 31 exposée à l'image de projection 4 émise par le dispositif d'éclairage 1,
- des moyens 2 de déplacement de l'image de projection sur la surface de travail dans au moins une direction de défilement,
- une mémoire de stockage d'au moins un motif de référence à partir duquel est déterminé le motif d'affichage.

Le système n'est pas limité aux modes de réalisation illustrés par les dessins, ou par la présente description. Par exemple, le système de fabrication illustré par les figures 1 et 2 montre un réceptacle 3 ouvert sur le haut, avec une surface de travail 31 correspondant à surface de la couche de matière sur ce côté ouvert, avec un dispositif d'éclairage 1 agencé au-dessus de la surface de travail 31 et donc du réceptacle 3.

Il est néanmoins bien compris que d'autres configurations pourraient être utilisées. Ainsi, le dispositif d'éclairage 1 pourrait être agencé en-dessous d'un réceptacle 3 avec un fond transparent, auquel cas la surface de travail 31 correspond à la surface de la couche de matière en contact avec ledit fond transparent, sur laquelle est projetée l'image de projection 4. Le brevet US 7052263 présente une telle configuration.

La mémoire de stockage comporte une pluralité de motifs de référence, et le motif de référence à partir duquel est déterminé le motif d'affichage du masque est sélectionné en fonction de critères relatifs au déplacement de l'image de projection dans la direction de défilement.

Plus précisément, et comme déjà expliqué plus haut, le masque consiste en une matrice de pixels de M colonnes par N lignes, par exemple 1024 colonnes par 768 lignes, chaque pixel pouvant projeter ou non de la lumière dans la direction de l'image de projection. Dans le cas d'un masque constitué de micro-miroirs numériques, chaque pixel est constitué d'un micro-miroir orientable selon deux orientations, l'une projetant la lumière incidente vers l'image de projection, l'autre projetant la lumière incidente vers un absorbeur. La première orientation est désignée comme l'état passant, la seconde orientation est désignée comme l'état bloquant.

L'état passant ou bloquant du pixel est déterminé par l'état logique, 1 ou 0, stocké dans une mémoire locale, par exemple une mémoire CMOS duale, sous-jacente au micro-miroir dudit pixel. Par exemple, à l'état logique 1 correspond l'état passant, et à l'état logique 2 correspond l'état bloquant.

La mise à jour des mémoires locales de la matrice de pixel se fait à partir d'une mémoire tampon de ligne via un bus parallèle cadencé par une horloge. Cette mise à jour se fait par ligne. Par exemple, dans le cas d'un bus 32 bits, et d'une ligne d'une longueur de 1024 pixels, il faut 32 fronts d'horloge pour mettre à jour les mémoires locales d'une ligne de pixels.

Les données de la mémoire tampon de ligne sont déterminées à partir d'un motif de référence par la lecture dans la mémoire de stockage d'une partie dudit motif de référence. La partie lue du motif de référence correspond à celle débutant à l'adresse mémoire donnée par le pointeur d'adresse de ligne et qui s'étend de l'étendue du motif d'affichage. Le passage d'une ligne à la suivante se fait en décalant le pointeur d'adresse de ligne, jusqu'à ce que l'ensemble de la matrice soit mise à jour.

Dans le cadre du défilement, l'adaptation du masque à ce défilement implique que le motif de référence soit plus étendu que le motif d'affichage, et que le pointeur d'adresse de ligne indiquant le début du motif d'affichage soit décalé de ligne en ligne en fonction du déplacement de l'image de projection 4 par rapport à la surface de travail 31.

Cependant, contrairement aux procédés de l'état de la technique, le motif de référence ne couvre pas l'entièreté de l'étendue du déplacement de l'image de projection dans la direction de défilement. Au contraire, dans le cas présent, le motif de référence couvre seulement une partie de cette étendue. Plusieurs motifs de référence sont utilisés en fonction du stade de déplacement de l'image de projection, donc du dispositif d'éclairage, dans la direction de défilement. De ce fait, lors du déplacement de l'image de projection, donc du dispositif d'éclairage, dans la direction de défilement il y a un changement du motif de référence à partir duquel est déterminé le motif d'affichage.

Ainsi, lorsque le déplacement de l'image de projection atteint un certain nombre de pixels dans la direction de défilement, le pointeur d'adresse de ligne est modifié pour pointer sur une zone mémoire correspondant à un motif de référence différent de celui utilisé pour la mise à jour précédente.

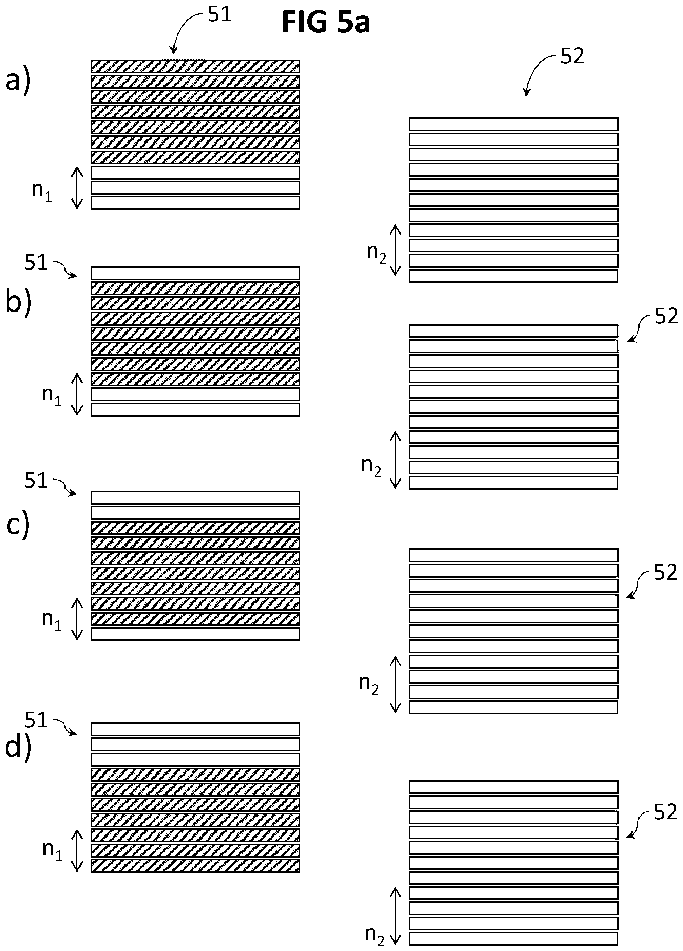

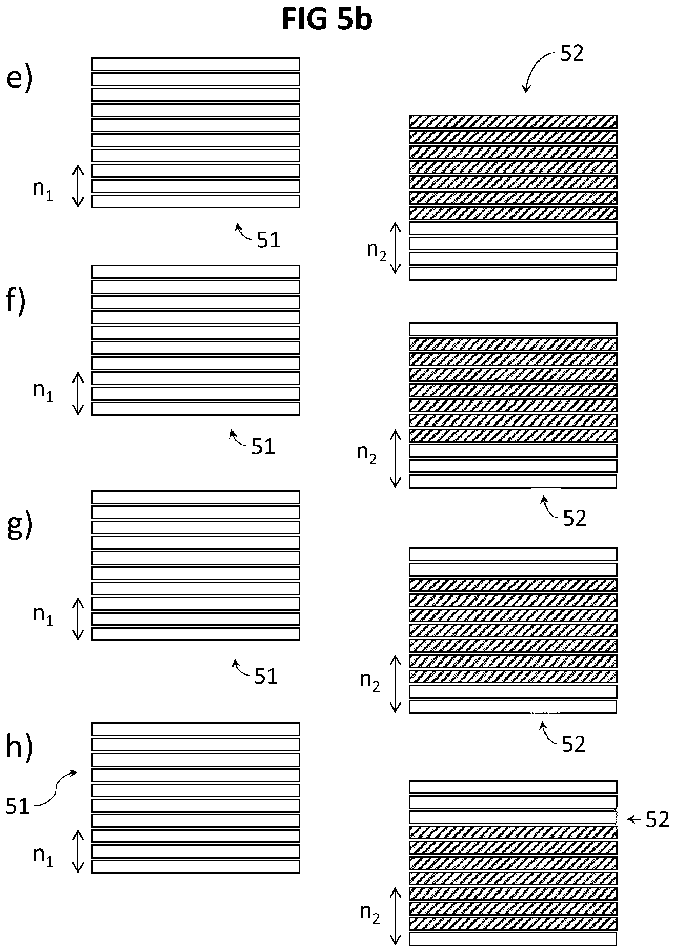

Les figures 5a et 5b illustrent un exemple du déroulement de la lecture des motifs de référence au cours du défilement. A titre d'exemple, la mémoire de stockage comprend ici deux motifs de référence 51, 52 qui y sont stockés. Dans cet exemple très simplifié, le motif d'affichage comprend 7 lignes. Les lignes du motif de référence utilisées dans le motif d'affichage sont hachurées : les 7 premières lignes du premier motif de référence 51 sont donc hachurées dans la première configuration a).

Lors des premières étapes du défilement, la mise à jour du motif d'affichage se traduit par un décalage des lignes du motif de référence utilisées pour le motif d'affichage. Ainsi, en partant de la situation de la configuration a), lorsque le défilement atteint l'équivalent d'un demi-pixel, les lignes du motif de référence utilisées pour le motif d'affichage sont décalées d'une ligne vers le bas. On obtient donc la configuration b), dans laquelle les lignes du motif de référence utilisées vont de la 2^{ème} ligne à la 8^{ème} ligne. Ce décalage se poursuit au cours des deux étapes de décalage suivantes, correspondant respectivement aux configurations c) et d). On constate que dans cette première partie illustrée par la figure 5a, le second motif de référence 52 n'est pas exploité.

Lors de l'étape de défilement qui fait suite à la configuration d), la mise à jour du motif d'affichage lorsque le défilement atteint un demi-pixel se fait à partir du second motif de référence 52, et non plus à partir du premier motif de référence 51. La figure 5b illustre le déroulement de ces étapes subséquentes.

Ainsi, dans la configuration e), ce sont les 7 premières lignes du second motif de référence 52 qui sont utilisées pour le motif d'affichage. De même que précédemment, lorsque le défilement atteint ensuite l'équivalent d'un demi-pixel, les lignes du motif de référence utilisées pour le motif d'affichage sont décalées d'une ligne vers le bas. On obtient donc la configuration f), dans laquelle les lignes du motif de référence utilisées vont de la 2^{ème} ligne à la 8^{ème} ligne. Ce décalage se poursuit au cours des deux étapes de décalage suivantes, correspondant respectivement aux configurations g) et h). On constate que dans cette seconde partie illustrée par la figure 5b, le premier motif de référence 51 n'est pas exploité.

Les motifs de référence présentent ainsi une longueur, en nombre de lignes, inférieure à la longueur totale du défilement. Cependant, ils présentent de préférence une longueur, en nombre de lignes, supérieure à celle du motif d'affichage. Cette longueur supplémentaire permet de procéder au défilement, et donc au décalage des lignes, sans avoir besoin de changer de motif de référence à chaque décalage. Dans l'exemple des figures 5a et 5b, le premier motif de référence 51 présente n₁ lignes supplémentaires par rapport à la longueur en nombre de lignes du motif d'affichage, tandis que le deuxième motif de référence 52 présente n₂ lignes supplémentaires par rapport à la longueur en nombre de lignes du motif d'affichage. Différents motifs de référence peuvent présenter des nombres différents de lignes supplémentaires (n₁≠n₂), mais pour des raisons de simplicité, il est préférable qu'au moins la plupart des motifs de référence présentent le même nombre de lignes supplémentaires (n₁≠n₂), et de préférence tous les motifs de référence.

Ainsi, l'utilisation des lignes du premier motif de référence 51 peut être décalée jusqu'à n₁ fois d'une ligne afin de mettre à jour le motif d'affichage au cours du défilement, et l'utilisation des lignes du second motif de référence 51 peut être décalée jusqu'à n₂ fois d'une ligne afin de mettre à jour le motif d'affichage au cours du défilement. De fait, le motif d'affichage peut être déterminé à partir d'un même motif de référence pendant une distance de défilement associée audit motif de référence, en l'occurrence pendant une distance de défilement pouvant aller jusqu'à n₁ lignes pour le premier motif de référence 51 et pour pendant une distance de défilement pouvant aller jusqu'à n₂ lignes pour le deuxième motif de référence 52. De préférence, les distances de défilement associées aux différents motifs de référence 51, 52 sont identiques. Bien entendu, le changement de motif de référence peut intervenir avant que le motif de référence n'ait été entièrement parcouru par le motif d'affichage.

De préférence, la distance de défilement associé à un motif correspond à un décalage du motif d'affichage correspondant à un nombre de pixels compris entre 2 et 100, et de préférence compris entre 2 et 40, et de préférence encore compris entre 5 et 15. En effet, il a été découvert que de tels distances permettaient de prendre en compte de manière satisfaisante l'évolution des conditions de projection induites par le défilement nécessitant un changement de motif de référence, sans surcharger inutilement la bande passante des liaisons de communication entre les éléments.

La distance de défilement à partir de laquelle est déterminé le changement de motif de référence peut être préalablement déterminée au cours d'une étape de calibrage. C'est notamment le cas lorsque le changement de motif de référence au cours du défilement vise à compenser l'évolution des déformations du motif projeté en fonction de l'avancement du défilement.

Dans ce cas, un motif de référence est préalablement construit à partir d'un motif de consigne, ledit motif de consigne correspondant au motif souhaité pour l'image de projection, en appliquant audit motif de consigne une déformation inverse d'une déformation entre le motif d'affichage et l'image de projection pour un avancement de défilement donné. Le motif de référence est alors associé audit avancement de défilement, et le motif d'affichage est déterminé à partir dudit motif de référence lorsque l'avancement du défilement correspond audit avancement de défilement donné.

Afin de définir le filtre de compensation à appliquer à chaque motif de référence, on met en oeuvre une étape préalable de mesure, au moyen d'un imageur sur lequel est projetée l'image de projection, de la déformation entre le motif d'affichage et l'image de projection par la comparaison entre le motif d'affichage et l'image de projection acquise par ledit imageur pour ledit avancement de défilement donné. L'imageur est positionné pour acquérir l'image de projection telle qu'elle serait projetée sur la surface de travail. L'imageur peut être positionné au même niveau que la surface de travail 31, ou un système de miroir peut permettre de renvoyer l'image de projection. L'imageur peut suivre le déplacement de l'image de projection 4, ou bien être dimensionné pour acquérir l'ensemble de la course de celle-ci.

On peut alors déterminer le filtre de compensation à partir de l'inverse de la déformation, afin de compenser celle-ci. Il est à noter que cette étape de mesure n'est pas nécessairement mise en oeuvre avant chaque opération de fabrication, puisque la déformation est fonction du système, et non pas des motifs propres à chaque fabrication. Les paramètres ainsi déterminés peuvent donc être conservés et réutilisés, bien qu'un recalibrage périodique de ceux-ci par la mise en oeuvre d'une étape de mesure permette de prendre en compte l'évolution des déformations au cours du temps.

Cette étape de mesure peut également être utilisée pour déterminer la fréquence de changement de motif de référence, au moyen des différentes comparaisons entre le motif d'affichage et l'image de projection acquise par ledit imageur pour différents états d'avancement du défilement. En effet, il est alors possible d'étudier les variations des déformations au cours du défilement et d'en déduire une fréquence (spatiale) de changement de motif de référence qui soit un compromis entre une adaptation adéquate à ces variations et l'utilisation de la bande passante des éléments de communication.

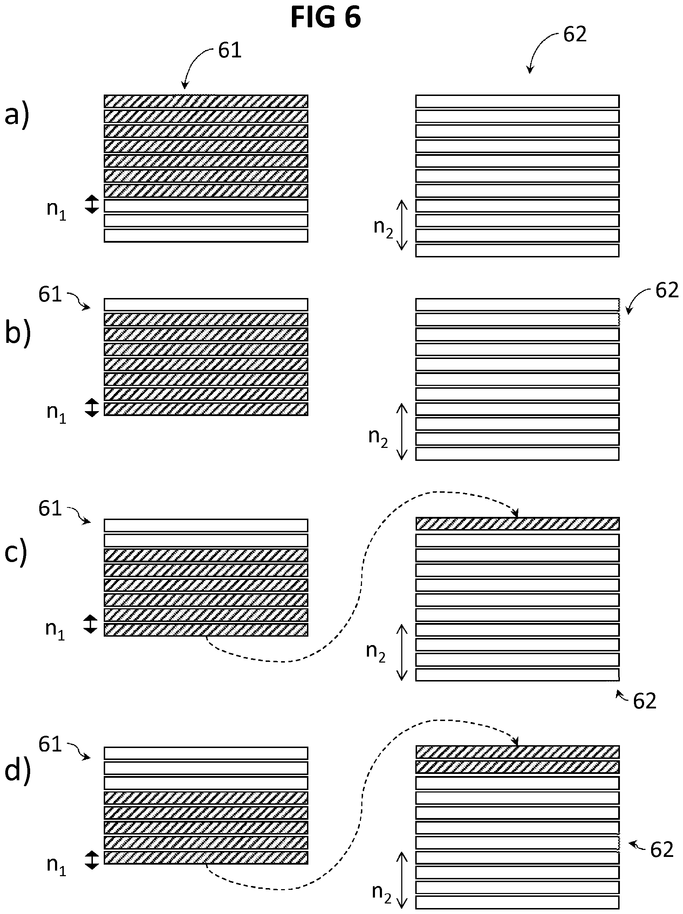

Par ailleurs, il est également possible que le motif d'affichage soit déterminé à partir de plus d'un motif de référence. La figure 6 illustre un exemple dans lequel, à la suite d'un défilement correspondant à des décalages des lignes d'un premier motif de référence 61 (configurations a) et b)), comme expliqué précédemment, le motif d'affichage est déterminé à partir de deux motifs de références 61, 62.

Les premières lignes du motif d'affichage dans la direction de défilement sont toujours déterminées à partir du premier motif 61, tandis que les lignes nouvellement utilisées pour le motif d'affichage, correspondant aux dernières lignes du motif d'affichage dans la direction de défilement, sont déterminées à partir du second motif 62.

Ainsi, dans la configuration c) de la figure 6, les six dernières lignes du premier motif 61 sont utilisées pour les six premières lignes du motif d'affichage dans la direction de défilement, tandis que la première ligne du second motif 62 est utilisée pour la dernière ligne du motif d'affichage dans la direction de défilement.

Ensuite, dans la configuration d), suite à un défilement correspondant à un pixel, les cinq dernières lignes du premier motif 61 sont utilisées pour les cinq premières lignes du motif d'affichage dans la direction de défilement, tandis que les deux premières lignes du second motif 62 sont utilisées pour les deux dernières lignes du motif d'affichage dans la direction de défilement. Le décalage se poursuit ensuite en utilisant à chaque fois une ligne de moins du premier motif 61 et une ligne de plus du second motif 62.

En surplus, ou de façon alternative, le motif d'affichage peut être mis à jour indépendamment du déplacement de l'image de projection dans la direction de défilement, par exemple même en l'absence de déplacement du masque, sur la base de critères temporels. Ainsi, le motif de référence à partir duquel est déterminé le motif d'affichage du masque peut également être sélectionné parmi la pluralité de motifs de référence en fonction de critères temporels, tels que l'écoulement d'un temps donné.

Notamment, au cours du déplacement de l'image de projection 4, les critères temporels de projection peuvent comprendre l'écoulement d'une durée donnée inférieure à une durée correspondant à un déplacement de l'image de projection 4 sur une distance correspondant à un demi-pixel sur la surface de travail 31. A cet égard, plusieurs motifs de référence peuvent être utilisés pour déterminer le motif d'affichage au cours de ladite durée inférieure à une durée correspondant à un déplacement de l'image de projection 4 sur une distance correspondant à un demi-pixel sur la surface de travail 31. Les motifs de référence peuvent correspondre à une même zone de projection sur la surface de travail, avec des motifs différents.

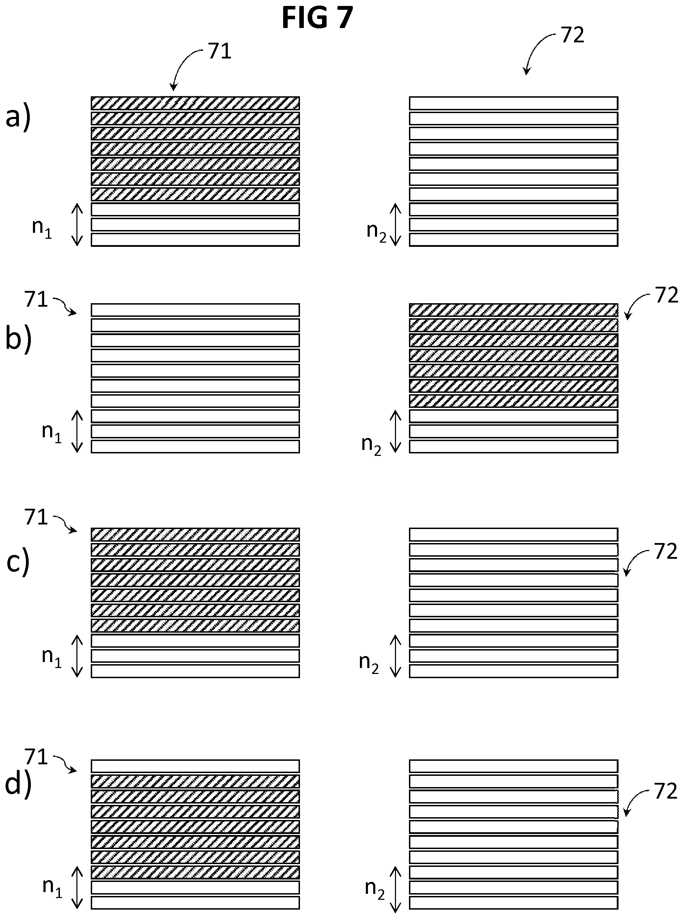

La figure 7 illustre de façon simplifiée cette situation. A titre d'exemple, la mémoire de stockage comprend ici deux motifs de référence 71, 72 qui y sont stockés. Dans cet exemple très simplifié, le motif d'affichage comprend 7 lignes. Les lignes du motif de référence utilisées dans le motif d'affichage sont hachurées : les 7 premières lignes du premier motif de référence 71 sont donc hachurées dans la première configuration a), qui correspond à un premier instant temporel. Dans cette même configuration a), le second motif de référence 72 n'est pas utilisé pour déterminer le motif d'affichage.

Au bout d'un intervalle de temps t₁, le motif d'affichage est mis à jour sans décalage de la partie utilisée du premier motif de référence 71, mais par un changement du motif de référence à partir duquel ledit motif d'affichage est déterminé. Ainsi qu'illustré par la configuration b), le motif d'affichage est désormais déterminé à partir du second motif de référence 72, comme le montre les lignes hachurées de celui-ci sur la figure 7, tandis que le premier motif de référence 71 n'est pas utilisé pour déterminer le motif d'affichage dans cette configuration.

Le changement de motif de référence se fait sans déplacement spatial significatif de l'image de projection 4, c'est-à-dire sans déplacement de celle-ci ou avec un déplacement inférieur à un demi pixel sur la surface de travail, voire très inférieur à un demi-pixel. En notant tₚ le temps que met l'image de projection pour effectuer un déplacement dans la direction de défilement correspondant à un pixel, l'intervalle de temps t₁ dont l'écoulement conditionne le changement de motif de référence est inférieur à la moitié de tₚ, de préférence encore inférieur à un dixième de tₚ. Ainsi, le masque 12 peut afficher plusieurs motifs d'affichage pendant un déplacement de l'image de projection 4 est inférieur à un demi pixel, sur la surface de travail 31, et par conséquent le motif de référence peut être changé plusieurs fois pendant un déplacement de l'image de projection 4 inférieur à un demi pixel.

Un même point de la surface de travail 31 dont la position correspond à la projection d'un pixel du masque 12, voit donc l'état dudit pixel du masque déterminé par au moins deux motifs de référence différents, alors qu'il s'agit du même pixel. Ainsi, ce même point de la surface de travail 31 peut être exposé à la lumière par l'état passant d'un pixel du masque 12, et ensuite être abrité de la lumière par l'état bloquant de ce même pixel du masque 12.

Au bout d'un intervalle de temps t₂, le motif d'affichage est mis à jour sans décalage de la partie utilisée du second motif de référence 72, mais par un changement du motif de référence à partir duquel ledit motif d'affichage est déterminé. L'intervalle de temps t₂ peut être le même que l'intervalle de temps t₁ ou bien être différent.

Un autre motif de référence peut être utilisé, ou il est possible de réutiliser le premier motif de référence 71. Ainsi qu'illustré par la configuration c, qui suit la configuration b), le motif d'affichage est de nouveau déterminé à partir du premier motif de référence 71, comme le montre les lignes hachurées de celui-ci sur la figure 7, tandis que le second motif de référence 72 n'est plus utilisé pour déterminer le motif d'affichage. La même partie du premier motif de référence 71 est utilisée si la somme des intervalles de temps t₁, t₂ respectifs d'utilisation de chaque motif de référence 71, 72 est inférieur à la moitié du temps tₚ de déplacement correspondant à un pixel, sinon, un décalage d'une ligne de la partie utilisée du premier motif de référence 71 est réalisée.

Le changement de motif de référence sans que le déplacement de l'image de projection dans la direction de défilement n'ait atteint un demi-pixel permet de mettre en oeuvre différentes techniques. Il est par exemple possible de moduler l'éclairage d'un point de la surface de travail 31 pour l'exposer moins longtemps que le temps de passage de l'image de projection 4 au-dessus de ce point. On peut ainsi doser l'énergie reçue par ce point par exemple en fonction des points de la surface de travail adjacents à ce point. En effet, en raison des différents transferts entre les points de la surface de travail, un point entouré de points éclairés, et qui reçoit de l'énergie de ceux-ci, aura besoin de moins d'énergie qu'un point adjacent à des points non éclairés pour obtenir la même réaction chimique, en application de la loi d'Arrhenius. On peut par exemple prévoir de n'éclairer un point entouré de points éclairés que pendant un certain pourcentage du temps de passage de l'image de projection, par exemple entre 70 et 90 %, et d'éclairer un point à la lisière d'une zone non éclairée pendant un pourcentage plus important du temps de passage de l'image de projection 4, par exemple entre 90 et 100 %.

On peut prévoir plusieurs motifs de référence pour déterminer le motif d'affichage au cours de la durée inférieure à une durée correspondant à un déplacement de l'image de projection 4 sur une distance correspondant à un demi-pixel sur la surface de travail 31, et au moins un desdits motif de référence est un motif d'équilibrage dont des états de pixels sont déterminés par les états des pixels. Ainsi, un même point de la surface de travail sera éclairé dans un motif de référence, et sera non éclairé dans un autre motif de référence, en fonction des points adjacents audit point. En augmentant le nombre de motifs de référence, il est possible de finement doser l'énergie fournie à chaque point de la surface de travail.

De la même façon, il est possible de compenser l'inhomogénéité de la répartition spatiale de l'intensité de l'éclairage. En effet, une source lumineuse 11 permet rarement d'obtenir un éclairage parfaitement homogène en intensité sur l'ensemble de l'image de projection 4, d'autant plus pour des sources lumineuses émettant dans l'ultraviolet, typiquement utilisées dans ce type d'application. On peut ainsi prévoir que les différents motifs de référence utilisés modulent la durée d'exposition d'un point au cours du passage de l'image de projection 4 en fonction de l'intensité de l'éclairage de ce point au cours du passage de l'image de référence. Les points éclairés par une intensité forte sont ainsi éclairés moins longtemps que les points éclairés par une intensité plus faible.

Typiquement, l'intensité de la lumière est plus forte au centre de l'image de projection. En raison du défilement de l'image de projection 4, il en résulte pour l'intensité lumineuse reçue cumulée des points de la surface de travail 31 un gradient perpendiculaire à la direction de défilement, croissant vers le centre et décroissant vers la périphérie. Les motifs de référence peuvent être sélectionnés de sorte de compenser ce gradient en modulant la durée d'éclairage des points de la surface de travail 31 en fonction de l'inverse de ce gradient. Ainsi, au moins un des motifs de référence peut être un motif de compensation de l'inhomogénéité de l'éclairage par la source lumineuse, ledit motif de compensation présentant une répartition spatiale des états des pixels caractérisée par une proportion plus importante de pixels à l'état bloquant au centre dudit motif que dans sa périphérie.

Lorsque le déplacement de l'image de projection 4, donc du masque 12, dans la direction de déplacement se fait de manière continue, l'image de projection 4 obtenue à partir du motif d'affichage déterminé à partir d'un motif de référence ne se superpose pas exactement à l'image de projection 4 obtenue à partir du motif d'affichage déterminé à partir du motif de référence précédemment utilisée. En raison du défilement de l'image de projection, il y a un léger décalage dans la direction de défilement. Cependant, alors que le déplacement de l'image de projection 4 correspond à une distance inférieure à un demi pixel, et plus typiquement inférieure à un dixième de pixel, le masque peut afficher différents motifs d'affichage à partir de différents motifs de référence. L'état d'un pixel du masque peut donc être modifié plusieurs fois pendant ce déplacement inférieur à un demi pixel. En choisissant des motifs de référence respectivement adaptés aux différentes phases du déplacement de l'image de projection pendant ce déplacement inférieur à un demi pixel, il est possible d'atteindre une précision de fabrication inférieur à la taille d'un pixel, précision d'autant plus grande que le nombre de motifs de référence et la fréquence de changement entre les motifs de référence sont grands.

Il est également possible, par exemple ensuite, de mettre à jour le motif d'affichage en décalant la partie utilisée d'un motif de référence, au fur et à mesure du déplacement de l'image de projection dans la direction de défilement, comme précédemment expliqué. Dans l'exemple simplifié de la figure 7, dans la configuration d), les lignes du premier motif de référence 71 utilisées pour le motif d'affichage (hachurées) ont été décalées d'une ligne vers le bas par rapport à la configuration c), pour accompagner le déplacement de l'image de projection. Par exemple, ce décalage peut être effectué lorsque le déplacement de l'image de projection atteint l'équivalent d'un demi-pixel.

La mise à jour du motif d'affichage sur des critères temporels, indépendamment du déplacement de l'image de projection 4 dans la direction de défilement, peut utilement être exploitée pour agrandir la partie utile de la surface de travail 31, notamment dans le cadre d'un déplacement continu. En effet, le déplacement du masque 12 dans la direction de défilement, et donc de l'image de projection sur la surface de travail, se fait à une vitesse nominale v₀. Or, ce déplacement n'atteint pas immédiatement cette vitesse nominale v₀.

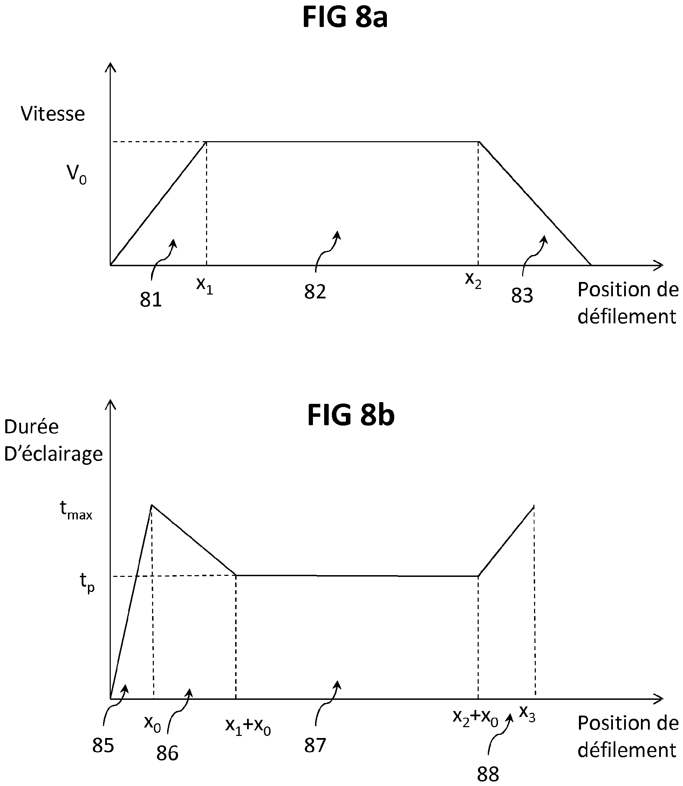

Sur la figure 8a est représentée cette vitesse de déplacement en fonction de la position de l'image de projection, correspondant au défilement du masque. Plus précisément, il s'agit de la vitesse atteinte par l'extrémité de l'image de projection opposée à la direction de défilement.

Lors de l'initialisation du déplacement, la vitesse de déplacement, initialement nulle, croît pendant une phase d'accélération 81, jusqu'à atteindre la vitesse nominale v₀ à partir du point x₁. Suit une phase 82 de déplacement à la vitesse nominale v₀ jusqu'au point x₂. La vitesse de déplacement décroît alors pendant une phase de décélération 83 jusqu'à redevenir nulle. On constate donc que la vitesse varie lors du déplacement.

Or, la vitesse de déplacement conditionne la durée d'éclairage d'un point de la surface de travail 31, et donc l'énergie fournie à celui-ci. En effet, pour un point éclairé par l'image de projection 4, l'énergie reçue augmente avec la durée d'éclairage, qui augmente avec la durée du passage de l'image de projection 4 sur la surface de travail 31, qui décroît avec la vitesse de déplacement. On a représenté schématiquement sur la figure 8b la durée d'éclairage en fonction de la position de défilement, correspondant au profil de vitesse représenté sur la figure 8a.

Correspondant à une première partie de la phase d'accélération 81, on retrouve une première phase d'éclairage de durée croissante 85, jusqu'à une position x₀. En raison de l'étendue spatiale de l'image de projection, une extrémité de l'image de projection d'un côté du défilement a une durée d'exposition différente de l'autre extrémité de l'image de projection de l'autre côté du défilement. Ainsi, un point situé à l'origine de la position de défilement n'est éclairé que quelques instants par l'image de projection 4, tandis que le point x₀ est éclairé tout le temps de passage de l'image de projection 4. Le point x₀ est un point d'extrémité de l'image de projection dans la direction de défilement dans la position initiale de l'image de projection 4. La distance entre l'origine et x₀ est donc l'étendue spatiale de l'image de projection 4 sur la surface de travail 31 dans la direction de défilement. Le point x₀ est aussi celui qui est éclairé le plus longtemps, pendant une durée tₘₐₓ, à la fois parce qu'il est éclairé tout le temps de passage de l'image de projection, mais également parce que l'image de projection passe avec une vitesse plus faible que pour les autres points suivants eux aussi éclairés tout le temps de passage de l'image de projection 4.

Ensuite, correspondant à une seconde partie de la phase d'accélération 81, on constate une première phase d'éclairage de durée décroissante 86, depuis la position x₀ jusqu'à la position x₁+x₀. Cette étendue du défilement correspond à des points éclairés le temps de passage de l'entière l'image de projection 4, à une vitesse croissante. A la position x₁, la vitesse est la vitesse nominale v₀, mais le point à cette position a été en partie éclairé par une image de projection 4 se déplaçant moins vite, d'où une durée d'éclairage décroissante entre la position x₁ et la position x₁+x₀.

Ensuite, correspondant à la phase 82 de déplacement à la vitesse nominale v₀, on retrouve une phase d'éclairage 87 de durée constante tₚ, jusqu'à la position x₂+x₀, pour les raisons citées au-dessus. Enfin, correspondant à la phase de décélération 83, on retrouve une seconde phase 88 d'éclairage de durée croissante, à partir de x₂+x₀ jusqu'à la position x₃, similaire dans sa cause à la phase 86. Il est à noter que les représentations portant sur la vitesse ou durée d'éclairage des points lorsqu'ils sont atteints par l'extrémité de l'image de projection opposée à la direction de défilement, il n'y a pas à la fin du défilement de phase similaire à la phase 85 qui suivrait la phase 88.

La durée tₚ d'éclairage pendant la phase 87 est la durée nominale permettant d'apporter à la couche de matière de la surface de travail l'énergie adéquate pour la réalisation de la réaction chimique recherchée. Toute autre durée ne permet pas de fabrication de qualité. Or, comme vu au-dessus, le début et la fin du défilement, en raison des différentes vitesses de déplacement, ne permet pas de conserver cette durée t_{P}. En outre, l'étendue spatiale de l'image de projection 4 ne permet pas de moduler l'intensité de l'éclairage par la source lumineuse 11. Pendant la phase d'accélération 81, une extrémité de l'image de projection 4 a une durée d'exposition différente de l'autre extrémité de l'image de projection 4. On ne peut donc pas adapter l'intensité de la source lumineuse pour compenser cet effet.

Il en résulte que les deux parties extrêmes de la surface de travail dans la direction de défilement ne sont pas exploitables avec les techniques actuelles. Généralement, la source lumineuse 11 n'émet de la lumière que pendant le déplacement à la vitesse nominale v₀ atteinte, c'est-à-dire entre les positions x₁ et x₂. Ce faisant, le déplacement du masque 12 est plus étendu que la partie utile de la surface de travail 31. Or, plus la course du masque 12 est longue, plus longues sont les tiges de guidage 21. Comme évoqué précédemment, de longs éléments ont tendance à dégrader la précision de la fabrication. Il est donc préférable de faire en sorte que la partie utile de la surface de travail 31 soit maximisée pour correspondre à la course du masque 12, afin d'augmenter le rendement sans dégrader la qualité.

Le procédé proposé permet de faire correspondre la partie utile de la surface de travail avec la course du masque, en procédant à des changements de motif de référence sans déplacement spatial de l'image de projection 4, au début et à la fin du défilement. On prévoit ainsi que le profil de déplacement de l'image de projection 4 sur la surface de travail 31 dans la direction de défilement comprend une partie initiale et une partie finale au cours de laquelle l'image de projection est fixe sur la surface de travail, et dans lequel le motif d'affichage présente une zone obturée dont la répartition sur ledit masque 12:
- régresse dans la direction du défilement dans la partie initiale, et/ou
- progresse dans la direction de défilement dans la partie finale.
La zone obturée ne dépend pas du motif à réaliser sur la surface de travail 31.

Plus précisément, plusieurs motifs de référence sont utilisés pour déterminer le motif d'affichage pendant une partie du déplacement au cours de laquelle l'image de projection 4 est fixe sur la surface de travail 31, lesdits motifs de référence définissant des motifs d'affichage respectifs se distinguant les uns des autres par un décalage progressif dans la direction de défilement de la zone obturée constituée par des lignes de pixels à l'état bloquant. Le décalage de la zone obturée laisse place à un motif d'affichage correspond au motif à projeter pour fabriquer le produit.

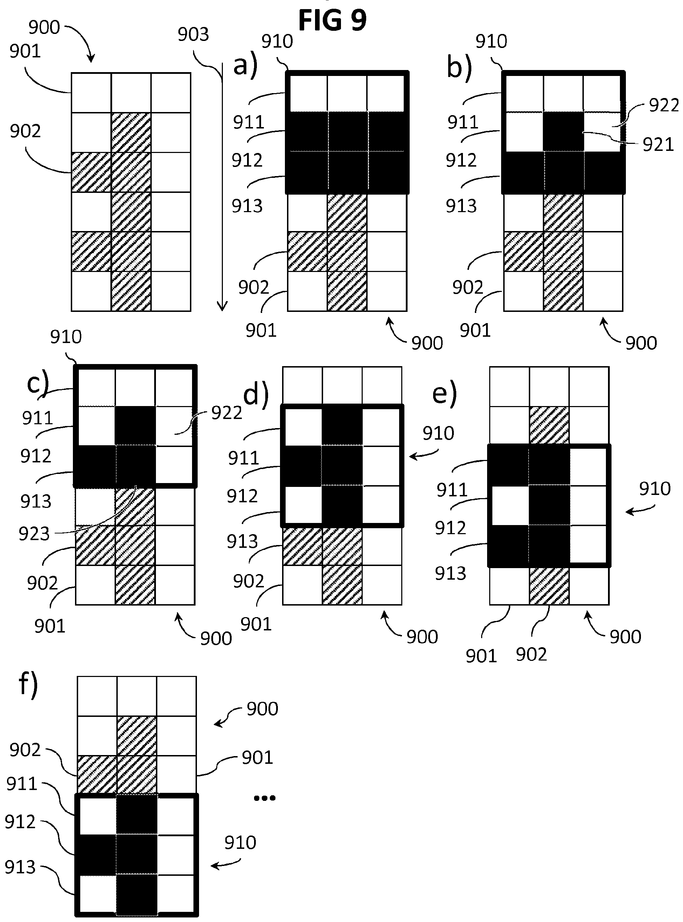

Pour illustrer ce procédé, on a représenté sur la figure 9 différentes étapes de l'initialisation d'un défilement, avec un masque très simplifié à neuf pixels. Le motif à réaliser sur la surface de travail 31 est représenté par la grille 900, avec en clair les points 901 à exposer à la lumière et en hachurés les points 902 à ne pas exposer à la lumière. La direction de défilement va du haut vers le bas, matérialisée par une flèche 903.

Dans la première étape a), le masque 910 se situe à sa position initiale, la plus en haut, en début de défilement. Les pixels de la première ligne 911 du masque 910 sont dans un état passant, laissant exposés à la lumière les points sous-jacents de la grille 900, qui sont des points 901 à exposer. Les pixels de la deuxième ligne 912 et de la troisième ligne 913 du masque 910 sont dans un état bloquant, empêchant l'exposition des points sous-jacents de la grille 900, que ces points soient des points 901 à exposer à la lumière ou des points 902 à ne pas exposer à la lumière. Il s'agit de la zone obturée.

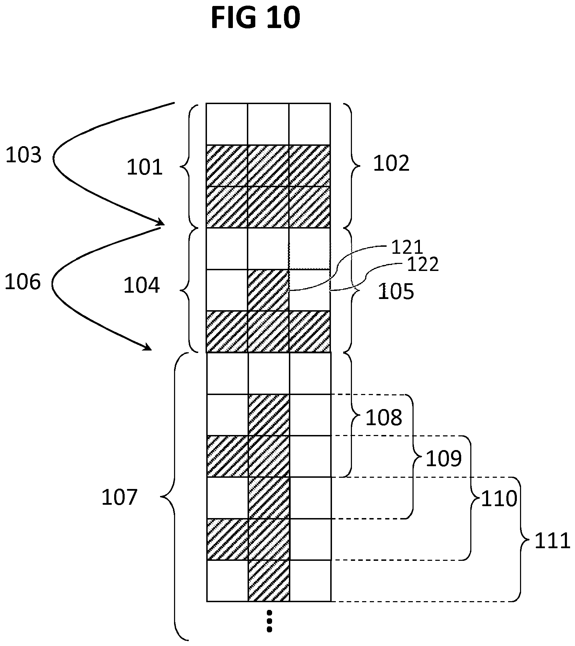

La figure 10 illustre la configuration des motifs de référence utilisés dans les étapes de la figure 9 dans une mémoire 100. Un motif de référence comporte une séquence d'états de pixel organisés en lignes correspondant à des lignes du motif d'affichage, et la partie utilisée dudit motif de référence correspond aux lignes affichées par le motif d'affichage à un instant donné.

Les données correspondant aux états des pixels du masque y sont représentées graphiquement : à une zone claire de la mémoire 100 correspond un état passant du pixel correspondant dans le masque 910, et à une zone hachurée de la mémoire 100 correspond un état bloquant du pixel correspondant dans le masque 910. A chaque ligne de la mémoire correspond les états d'une ligne du masque 910.

Le motif d'affichage du masque 910 lors de la première étape a) correspond à un premier motif de référence 101, constitué par les trois première lignes de la mémoire 100. La partie utilisée 102 de ce premier motif de référence 101 correspond à l'entièreté dudit premier motif de référence 101, qui est donc intégralement traduit dans le motif d'affichage. Ainsi, la première ligne de la partie utilisée 102 ne comprend que des zones en clair, ce qui se traduit par l'état passant des pixels de la première ligne 911 du masque 910 lors de l'étape a). Les deux lignes suivantes sont hachurées, ce qui se traduit par l'état bloquant des pixels de la deuxième ligne 912 et de la troisième ligne 913 du masque 910 lors de l'étape a), c'est-à-dire la zone obturée.

Une mise à jour du motif d'affichage s'effectue par un changement du motif de référence à partir duquel est déterminé le motif d'affichage du masque, sur la base d'un critère temporel : la mise à jour intervient après l'écoulement d'un temps tₐ. Il n'y a ici pas de déplacement du masque 910 et donc de l'image de projection 4.

La partie utilisée d'un motif de référence est adressée au moyen d'un pointeur d'adresse mémoire. Pour la mise à jour du motif d'affichage faisant intervenir un nouveau motif de référence, le pointeur est décalé d'un nombre de bits différent de la taille d'une ligne du motif de référence lors de la sélection d'un nouveau motif de référence. Plus précisément, le pointeur est décalé pour adresser le nouveau motif de référence. Pour l'exemple de la figure 10, il s'agit d'un saut d'adressage 103 par lequel le pointeur est décalé de l'équivalent de trois lignes, pour pointer sur le début du deuxième motif de référence 104.

La partie utilisée 105 de ce deuxième motif de référence 104 correspond à l'entièreté dudit deuxième motif de référence 104, qui est donc intégralement traduit dans le motif d'affichage illustré par l'étape b) de la figure 9. Ainsi, la première ligne de la partie utilisée 105 ne comprend que des zones en clair, ce qui se traduit par un état passant des pixels de la première ligne 911 du masque 910 lors de l'étape b) comme lors de l'étape a). La deuxième ligne de la partie utilisée 105 comprend une zone centrale 121 en hachurée, et des zones extérieures 122 en clair. En conséquence, le masque 910 présente dans l'étape b) une deuxième ligne 912 présentant un pixel central 921 à l'état bloquant, correspondant à une zone 902 de la grille 900 à ne pas exposer, et deux pixels extérieurs 922 à l'état passant correspondant à des zones 901 de la grille 900 à exposer.

Comme lors de l'étape a), la troisième ligne de la partie utilisée 105 du deuxième motif de référence 104 ne comprend que des zones hachurées, c'est-à-dire codant l'état bloquant. En conséquence, le masque 910 présente une troisième ligne 913 ne présentant que des pixels à l'état bloquant. On a donc décalé la zone obturée dans la direction de défilement.

Le motif d'affichage est ensuite mis à jour par le décalage du pointeur pour adresser un nouveau motif de référence, après l'écoulement d'un temps t_{b}, qui peut être le même que le temps tₐ ou différent de celui-ci. Pour l'exemple de la figure 10, il s'agit d'un saut d'adressage 106 par lequel le pointeur est décalé de l'équivalent de trois lignes, pour pointer sur le début du troisième motif de référence 107. Le motif de masque correspondant est illustré par l'étape c) de la figure 9.

Durant cette étape c), la partie utilisée 108 de ce troisième motif de référence 107 correspond aux trois premières lignes du troisième motif de référence 107, et est traduit par le motif d'affichage du masque 911 de l'étape c) de la figure 9. Les deux premières lignes sont les mêmes que dans l'étape b), mais la troisième ligne reprend cette fois la répartition des pixels de la grille 900 servant de modèle, avec deux pixels à l'état bloquant 923 et un pixel à l'état passant, en correspondance avec les zones 902 à ne pas exposer et les zones 901 à exposer, respectivement. Le décalage de la partie obturée a donc résulté en la disparition de celle-ci du motif d'affichage.

Dans ces premières étapes, le masque 911 n'a pas bougé, mais le motif d'affichage a été mis à jour chaque étape, résultant en un décalage d'une zone ou partie obturée, constituée par des lignes de pixels à l'état bloquant, progressivement ligne par ligne, dans la direction de défilement. Le déplacement du masque 910, et donc de l'image de projection 4, ne commence qu'à partir du moment où le décalage de la partie obturée a parcouru le masque 910, et où le masque affiche uniquement le motif à réaliser.

Ainsi, à partir de l'étape c) de la figure 9, le masque 911 se déplace dans la direction de défilement, ici vers le bas. Le troisième motif de référence 107 comporte une séquence d'états de pixel organisés en lignes correspondant à des lignes du motif d'affichage, et la partie utilisée dudit motif de référence correspond aux lignes affichées par le motif d'affichage. Comme précédemment, la partie utilisée du motif de référence est adressée au moyen d'un pointeur d'adresse mémoire. Au cours du déplacement du masque, l'adresse mémoire du pointeur est décalée d'un nombre de bits correspondant à la taille d'une ligne du motif de référence pendant la mise à jour du motif d'affichage à partir du même troisième motif de référence 107. Autrement dit, à chaque étape du déplacement, la partie utilisée est décalée d'une ligne du troisième motif de référence 107. Le motif d'affichage correspond à la partie utilisée 108 lors de l'étape c), à la partie utilisée 109 lors de l'étape d), à la partie utilisée 110 lors de l'étape e), à la partie utilisée 111 lors de l'étape f), etc., une partie utilisée pendant une étape correspondant au décalage de la partie utilisée dans l'étape précédente, d'une ligne dans le troisième motif de référence 107. Bien entendu, le motif de référence peut ensuite être changé, comme expliqué plus haut.

La mise à jour du motif d'affichage sans déplacement du masque 910 permet de faire en sorte que l'exposition potentielle des points de la surface de travail soit la même aussi bien aux extrémités de la course du masque 910 qu'au milieu de celle-ci. En reprenant l'exemple de la figure 9, la première ligne de la surface de travail est potentiellement exposée pendant les trois premières étapes a), b) et c). La deuxième ligne de la surface de travail est aussi potentiellement exposée pendant trois étapes b), c) et d). Et la troisième ligne de la surface de travail est aussi potentiellement exposée pendant trois étapes c), d) et e).

Une fois arrivé à l'autre extrémité de la surface de travail, la même façon de procéder peut être mise en oeuvre, avec un motif d'affichage modifié plusieurs fois en l'absence de déplacement de l'image de projection, avec plusieurs motifs de référence utilisés pour déterminer le motif d'affichage, lesdits motifs de référence définissant des motifs d'affichage respectifs se distinguant les uns des autres par un décalage progressif dans la direction de défilement d'une zone obturée, ou partie obturée, constituée par des lignes de pixels à l'état bloquant.

Ainsi, chaque point de la surface de travail est exposé pendant une durée correspondant à la durée de passage de l'image de projection 4 lors du défilement de celle-ci à la vitesse nominale. Il n'y a donc plus de problème d'exposition aux extrémités de la course du masque, correspondant aux parties initiale et finale du déplacement de l'image de projection, et la partie utile de la surface de travail peut correspondre à la course du masque.

Différentes possibilités ont été évoquées concernant le choix du motif de référence à partir duquel est déterminé le motif d'affichage du masque. Ces différentes possibilités peuvent être employées indépendamment les unes des autres, les unes après les autres, ou bien en même temps.

Typiquement, différentes techniques sont combinées pour réaliser une couche d'un objet. Par exemple, lors de l'exposition de la surface de travail 31 pour réaliser une couche d'un objet, la course de l'image de projection 4 peut comprendre :
- une phase de départ au cours de laquelle ladite image de travail 4 est stationnaire, avec un changement du motif de référence en fonction de critères temporels, sans qu'un critère relatif au déplacement ne soit pris en compte,
- une phase de déplacement de l'image de projection 4 avec un changement du motif de référence en fonction de critères relatifs audit déplacement, et
- une phase finale au cours de laquelle ladite image de projection 4 est stationnaire, avec un changement du motif de référence en fonction de critères temporels, sans qu'un critère relatif au déplacement ne soit pris en compte.

En outre, durant la phase de déplacement de l'image de projection 4, le motif de référence peut être modifié en fonction de critères temporels en plus des critères de déplacement, notamment pour compenser l'inhomogénéité de l'éclairage ou pour prendre en compte l'éclairement des points adjacents à un point de l'image de projection 4.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention tel que défini par les revendications.

## Revendications

1. Procédé de fabrication d'un produit mis en oeuvre par un système de fabrication par empilement de couche de matière, ledit système comprenant
- un dispositif d'éclairage (1) comprenant une source lumineuse (11) et un masque (12) adapté pour transmettre ou bloquer la lumière émise par la source lumineuse (11) selon un motif d'affichage pour créer une image de projection, ledit masque comprenant une matrice de pixels pouvant prendre un état passant et un état bloquant, l'état passant se traduisant par une transmission de lumière en direction du point correspondant de l'image de projection, l'état bloquant se traduisant par une absence de transmission de lumière en direction du point correspondant de l'image de projection, et le motif d'affichage correspondant à la répartition des états desdits pixels
- un réceptacle (3) agencé pour contenir une couche de matière présentant une surface de travail (31) exposée à l'image de projection (4) émise par le dispositif d'éclairage (1),
- des moyens (2) de déplacement de l'image de projection sur la surface de travail (31) dans une direction de défilement,
- une mémoire de stockage comprenant au moins un motif de référence (51, 52, 61, 62) à partir duquel est déterminé le motif d'affichage, le motif de référence comportant une séquence d'états de pixel,
dans lequel le motif d'affichage correspond à une partie utilisée du motif de référence, et le motif d'affichage est mis à jour au cours du déplacement de l'image de projection (4) dans la direction de défilement au fur et à mesure dudit déplacement de l'image de projection par un décalage de la partie utilisée du motif de référence, la mémoire de stockage comportant une pluralité de motifs de référence, et le motif de référence à partir duquel est déterminé le motif d'affichage du masque est sélectionné parmi la pluralité de motifs de référence en fonction de critères relatifs au déplacement de l'image de projection dans la direction de défilement et en fonction de critères temporels,
dans lequel le motif de référence à partir duquel est déterminé le motif d'affichage du masque est sélectionné parmi la pluralité de motifs de référence au moins en fonction de critères temporels,
dans lequel le motif d'affichage est modifié plusieurs fois en l'absence de déplacement de l'image de projection,
**caractérisé en ce que** le profil de déplacement de l'image de projection sur la surface de travail dans la direction de défilement comprend une partie initiale et une partie finale au cours de laquelle l'image de projection est fixe sur la surface de travail, et et **en ce que** le motif d'affichage présente une zone obturée dont la répartition sur ledit masque:
- régresse dans la direction du défilement dans la partie initiale, et/ou
- progresse dans la direction de défilement dans la partie finale.

2. Procédé selon la revendication précédente, dans lequel le déplacement de l'image de projection (4) dans la direction de défilement (x) se fait de manière continue.

3. Procédé selon l'une quelconque des revendications précédentes, dans lequel les critères relatifs au déplacement de l'image de projection comprennent des distances parcourues par l'image de projection (4) dans la direction de défilement (x).

4. Procédé selon la revendication précédente, dans lequel le motif d'affichage est déterminé à partir d'un même motif de référence pendant une distance de défilement associée audit motif de référence.

5. Procédé selon la revendication précédente, dans lequel la distance de défilement associé à un motif de référence correspond à un décalage du motif d'affichage correspondant à un nombre de pixels compris entre 2 et 100, et de préférence compris entre 2 et 40, et de préférence encore compris entre 5 et 15.

6. Procédé selon l'une des deux revendications 4 ou 5, dans lequel les distances de défilement associées à différents motifs de référence sont identiques.

7. Procédé selon l'une quelconque des revendications précédentes, dans lequel le motif de référence comporte une séquence d'états de pixel organisés en lignes correspondant à des lignes du motif d'affichage, et la partie utilisée dudit motif de référence correspond aux lignes affichées par le motif d'affichage, dans lequel la partie utilisée du motif de référence est adressée au moyen d'un pointeur d'adresse mémoire, dans lequel l'adresse mémoire dudit pointeur étant décalée d'un nombre de bits correspondant à la taille d'une ligne du motif de référence pendant la mise à jour du motif d'affichage à partir d'un même motif de référence, et d'un nombre de bits différent de la taille d'une ligne du motif de référence lors de la sélection d'un nouveau motif de référence.

8. Procédé selon l'une quelconque des revendications précédentes, dans lequel pour chacun des motifs de référence, ledit motif de référence est préalablement construit à partir d'un motif de consigne, ledit motif de consigne correspondant au motif souhaité pour l'image de projection, en appliquant audit motif de consigne un filtre de compensation inverse d'une déformation entre le motif d'affichage et l'image de projection pour un avancement de défilement donné.

9. Procédé selon la revendication précédente, dans lequel le motif de référence est associé audit avancement de défilement, et le motif d'affichage est déterminé à partir dudit motif de référence lorsque l'avancement du défilement correspond audit avancement de défilement donné.

10. Procédé selon l'une des revendications 8 ou 9, comprenant une étape préalable de mesure, au moyen d'un imageur sur lequel est projetée l'image de projection (4), de la déformation entre le motif d'affichage et l'image de projection par la comparaison entre le motif d'affichage et l'image de projection acquise par ledit imageur pour ledit avancement de défilement donné.

11. Procédé selon la revendication précédente, dans lequel la fréquence de changement de motif de référence est déterminée par ladite comparaison entre le motif d'affichage et l'image de projection (4) acquise par ledit imageur.

12. Procédé selon l'une des revendications précédente, dans lequel le motif de référence à partir duquel est déterminé le motif d'affichage du masque est sélectionné parmi la pluralité de motifs de référence au moins en fonction de critères temporels, et dans lequel au cours du déplacement de l'image de projection (4), les critères temporels de projection comprennent l'écoulement d'une durée donnée inférieure à une durée correspondant à un déplacement de l'image de projection sur une distance correspondant à un demi-pixel sur la surface de travail.

13. Procédé selon la revendication précédente, dans lequel plusieurs motifs de référence sont utilisés pour déterminer le motif d'affichage au cours de ladite durée inférieure à une durée correspondant à un déplacement de l'image de projection sur une distance correspondant à un demi-pixel sur la surface de travail, et au moins un desdits motif de référence est un motif de compensation de l'inhomogénéité de l'éclairage par la source lumineuse, ledit motif de compensation présentant une répartition spatiale des états des pixels est **caractérisée par** une proportion plus importante de pixels à l'état bloquant au centre dudit motif que dans sa périphérie.

14. Procédé selon l'une des revendications 12 à 13, dans lequel plusieurs motifs de référence sont utilisés pour déterminer le motif d'affichage au cours de ladite durée inférieure à une durée correspondant à un déplacement de l'image de projection sur une distance correspondant à un demi-pixel sur la surface de travail, et au moins un desdits motif de référence est un motif d'équilibrage dont des états de pixels sont déterminés par les états des pixels adjacents auxdits pixels dans un autre desdits motifs de référence.

15. Procédé selon l'une des revendications précédentes, dans lequel plusieurs motifs de référence sont utilisés pour déterminer le motif d'affichage pendant une partie du déplacement au cours de laquelle l'image de projection est fixe sur la surface de travail, lesdits motifs de référence définissant des motifs d'affichage respectifs se distinguant les uns des autres par un décalage progressif dans la direction de défilement de la zone obturée constituée par des lignes de pixels à l'état bloquant.

16. Produit programme d'ordinateur comprenant des instructions de code de programme enregistrées sur un support utilisable dans un ordinateur qui conduisent l'appareil selon la revendication 17 à exécuter les étapes du procédé selon l'une quelconque des revendications précédentes.

17. Système de fabrication par empilement de couches de matière, ledit système comprenant
- un dispositif d'éclairage (1) comprenant une source lumineuse (11) et un masque (12) adapté pour transmettre ou bloquer la lumière émise par la source lumineuse selon un motif d'affichage pour créer une image de projection (4), ledit masque (12) comprenant une matrice de pixels configurés pour prendre un état passant et un état bloquant, l'état passant se traduisant par une transmission de lumière en direction du point correspondant de l'image de projection, l'état bloquant se traduisant par une absence de transmission de lumière en direction du point correspondant de l'image de projection, et le motif d'affichage correspondant à la répartition des états desdits pixels,
- un réceptacle (3) agencé pour contenir une couche de matière présentant une surface de travail (31) exposée à l'image de projection (4) émise par le dispositif d'éclairage (1),
- des moyens de déplacement configurés pour déplacer l'image de projection sur la surface de travail dans une direction de défilement,
- un produit programme d'ordinateur suivant la revendication 16,
- une mémoire de stockage comprenant au moins un motif de référence à partir duquel est déterminable le motif d'affichage, le motif de référence comportant une séquence d'états de pixel, la mémoire de stockage comportant une pluralité de motifs de référence (51, 52, 61, 62).

## Patentansprüche

1. Verfahren zur Herstellung eines Produkts unter Verwendung eines Systems zur Herstellung von Materialschichten durch Stapeln, wobei das System folgendes umfasst
- eine Beleuchtungsvorrichtung (1), die eine Lichtquelle (11) und einer Maske (12) umfasst, die dazu ausgelegt ist, von der Lichtquelle (11) emittiertes Licht gemäß einem Anzeigemuster durchzulassen oder zu blockieren, um ein Projektionsbild zu erzeugen, wobei die Maske eine Matrix von Pixeln umfasst, die einen Durchlasszustand und einen Blockierzustand annehmen können, wobei der Durchlasszustand zu einer Lichtdurchlässigkeit in Richtung auf den entsprechenden Punkt des Projektionsbildes führt, der Blockierzustand zu keiner Lichtdurchlässigkeit in Richtung auf den entsprechenden Punkt des Projektionsbildes führt und das Anzeigemuster der Verteilung der Zustände der Pixel entspricht,
- eine Aufnahme (3), die so angeordnet ist, dass sie eine Materialschicht mit einer Arbeitsfläche (31) enthält, die dem von der Beleuchtungsvorrichtung (1) emittierten Projektionsbild (4) ausgesetzt ist,
- Mittel (2) zum Verschieben des Projektionsbildes auf der Arbeitsfläche (31) in einer Bildlaufrichtung,
- einen Speicher, der mindestens ein Referenzmuster (51, 52, 61, 62) umfasst, aus dem das Anzeigemuster bestimmt wird, wobei das Referenzmuster eine Folge von Pixelzuständen umfasst,
wobei das Anzeigemuster einem verwendeten Abschnitt des Referenzmusters entspricht und das Anzeigemuster während der Verschiebung des Projektionsbildes (4) in der Bildlaufrichtung aktualisiert wird, wenn die Verschiebung des Projektionsbildes durch eine Verschiebung des verwendeten Abschnitts des Referenzmusters erfolgt,
wobei der Speicher eine Vielzahl von Referenzmustern aufweist, und das Referenzmuster, aus dem das Maskenanzeigemuster bestimmt wird, aus der Vielzahl von Referenzmustern gemäß Kriterien, die sich auf die Verschiebung des Projektionsbildes in der Bildlaufrichtung beziehen, und gemäß Zeitkriterien ausgewählt wird,
wobei das Referenzmuster, aus dem das Maskenanzeigemuster bestimmt wird, aus der Vielzahl von Referenzmustern zumindest nach Zeitkriterien ausgewählt wird,
wobei das Anzeigemuster mehrmals geändert wird, wenn das Projektionsbild nicht verschoben wird,
**dadurch gekennzeichnet, dass** das Verschiebungsprofil des Projektionsbildes auf der Arbeitsfläche in der Bildlaufrichtung einen Anfangsabschnitt und einen Endabschnitt umfasst, in dem das Projektionsbild auf der Arbeitsfläche fixiert ist, und
dass das Anzeigemuster einen maskierten Bereich aufweist, dessen Verteilung über die Maske:
- in der Bildlaufrichtung in dem Anfangsabschnitt zurückschreitet und/oder
- in dem Endabschnitt in der Bildlaufrichtung fortschreitet.

2. Verfahren nach dem vorhergehenden Anspruch, wobei die Verschiebung des Projektionsbildes (4) in der Bildlaufrichtung (x) kontinuierlich ist.

3. Verfahren nach einem der vorhergehenden Ansprüche, wobei die Kriterien für die Verschiebung des Projektionsbildes Distanzen umfassen, die das Projektionsbild (4) in der Bildlaufrichtung (x) zurücklegt.

4. Verfahren nach dem vorhergehenden Anspruch, wobei das Anzeigemuster während einer dem Referenzmuster zugeordneten Bildlaufdistanz aus einem gleichen Referenzmuster bestimmt wird.

5. Verfahren nach dem vorhergehenden Anspruch, wobei die einem Referenzmuster zugeordnete Bildlaufdistanz einen Versatz des Anzeigemusters entspricht, der einer Anzahl von Pixeln zwischen 2 und 100, vorzugsweise zwischen 2 und 40, noch bevorzugter zwischen 5 und 15 entspricht.

6. Verfahren nach einem der beiden Ansprüche 4 oder 5, wobei die verschiedenen Referenzmustern zugeordneten Bildlaufdistanzen identisch sind.

7. Verfahren nach einem der vorhergehenden Ansprüche, wobei das Referenzmuster eine Folge von Pixelzuständen umfasst, die in Zeilen organisiert sind, die Zeilen des Anzeigemusters entsprechen, und der verwendete Abschnitt des Referenzmusters den Zeilen entspricht, die durch das Anzeigemuster angezeigt werden, wobei der verwendete Abschnitt des Referenzmusters mittels eines Speicheradressenzeigers adressiert wird, wobei die Speicheradresse des Zeigers um eine Anzahl von Bits, die der Größe einer Zeile des Referenzmusters während der Aktualisierung des Anzeigemusters von einem gleichen Referenzmuster entspricht, und um eine Anzahl von Bits versetzt wird, die sich von der Größe einer Zeile des Referenzmusters unterscheidet, wenn ein neues Referenzmuster ausgewählt wird.

8. Verfahren nach einem der vorhergehenden Ansprüche, wobei für jedes der Referenzmuster das Referenzmuster zuvor aus einem eingestellten Muster konstruiert wird, wobei das eingestellte Muster dem gewünschten Muster für das Projektionsbild entspricht, indem auf das eingestellte Muster ein Filter zum umgekehrten Kompensieren einer Verzerrung zwischen dem Anzeigemuster und dem Projektionsbild für einen gegebenen Bildlauffortschritt angewendet wird.

9. Verfahren nach dem vorhergehenden Anspruch, wobei das Referenzmuster mit dem gegebenen Bildlauffortschritt verknüpft ist und das Anzeigemuster aus dem Referenzmuster bestimmt wird, wenn der Bildlauffortschritt dem gegebenen Bildlauffortschritt entspricht.

10. Verfahren nach einem der Ansprüche 8 oder 9, mit einem vorhergehenden Schritt des Messens der Verformung zwischen dem Anzeigemuster und dem Projektionsbild mit Hilfe eines Bildwandlers, auf den das Projektionsbild (4) projiziert wird, durch Vergleichen des Anzeigemusters und des Projektionsbildes, das von dem Bildwandler für den gegebenen Bildlauffortschritt erfasst wird.

11. Verfahren nach dem vorhergehenden Anspruch, wobei die Änderungsfrequenz des Referenzmusters durch den Vergleich zwischen dem Anzeigemuster und dem Projektionsbild (4) bestimmt wird, das von dem Bildwandler erfasst wird.

12. Verfahren nach einem der vorhergehenden Ansprüche, wobei das Referenzmuster, aus dem das Maskenanzeigemuster bestimmt wird, aus der Vielzahl von Referenzmustern zumindest nach Zeitkriterien ausgewählt wird, und wobei während der Verschiebung des Projektionsbildes (4) die Projektionszeitkriterien den Ablauf einer gegebenen Zeitdauer einschließen, die kürzer ist als eine Zeitdauer, die einer Verschiebung des Projektionsbildes über eine Distanz entspricht, die einem halben Pixel auf der Arbeitsfläche entspricht.

13. Verfahren nach dem vorhergehenden Anspruch, wobei eine Vielzahl von Referenzmustern verwendet wird, um das Anzeigemuster während der Zeitdauer zu bestimmen, die kürzer ist als eine Zeitdauer, die einer Verschiebung des Projektionsbildes über eine Distanz entspricht, die einem halben Pixel auf der Arbeitsfläche entspricht, und wobei mindestens eines der Referenzmuster ein Kompensationsmuster für eine Inhomogenität der Beleuchtung durch die Lichtquelle ist, wobei das Kompensationsmuster eine räumliche Verteilung von Pixelzuständen aufweist und durch einen größeren Anteil von Pixeln im Blockierzustand in der Mitte des Musters als in seiner Peripherie gekennzeichnet ist.

14. Verfahren nach einem der Ansprüche 12 bis 13, wobei eine Vielzahl von Referenzmustern verwendet wird, um das Anzeigemuster während der Zeitdauer zu bestimmen, die kürzer ist als eine Zeitdauer, die einer Verschiebung des Projektionsbildes über eine Distanz entspricht, die einem halben Pixel auf der Arbeitsfläche entspricht, und mindestens eines der Referenzmuster ein Ausgleichsmuster ist, dessen Pixelzustände durch die Zustände von Pixeln bestimmt werden, die den Pixeln in einem anderen der Referenzmuster benachbart sind.

15. Verfahren nach dem vorhergehenden Anspruch, wobei eine Vielzahl von Referenzmustern verwendet wird, um das Anzeigemuster während eines Abschnitts der Verschiebung zu bestimmen, in dem das Projektionsbild auf der Arbeitsfläche fixiert ist, wobei die Referenzmuster jeweilige Anzeigemuster definieren, die sich voneinander durch einen progressiven Versatz in der Bildlaufrichtung des durch Zeilen von Pixeln im Blockierzustand gebildeten geschlossenen Bereichs unterscheiden.

16. Computerprogrammprodukt, das Programmcodeinstruktionen umfasst, die auf einem in einem Computer verwendbaren Medium aufgezeichnet sind und die die Vorrichtung nach Anspruch 17 zur Durchführung der Verfahrensschritte antreiben, um die Verfahrensschritte nach einem der vorstehenden Ansprüche auszuführen.

17. System zur Herstellung von Materialschichten durch Stapeln, wobei das System umfasst
- eine Beleuchtungsvorrichtung (1), die eine Lichtquelle (11) und eine Maske (12) umfasst, die dazu ausgelegt ist, von der Lichtquelle emittiertes Licht in einem Anzeigemuster durchzulassen oder zu blockieren, um ein Projektionsbild (4) zu erzeugen, wobei die Maske (12) eine Matrix von Pixeln umfasst, die so konfiguriert sind, dass sie einen Durchlasszustand und einen Blockierzustand annehmen, wobei der Durchlasszustand zu einer Lichtdurchlass in Richtung auf den entsprechenden Punkt des Projektionsbildes führt, der Blockierzustand zu keinem Lichtdurchlass in Richtung auf den entsprechenden Punkt des Projektionsbildes führt und das Anzeigemuster der Verteilung der Zustände der Pixel entspricht,
- einen Behälter (3), der so angeordnet ist, dass er eine Materialschicht enthält, die eine Arbeitsfläche (31) aufweist, die dem von der Beleuchtungseinrichtung (1) emittierten Projektionsbild (4) ausgesetzt ist,
- Verschiebungsmittel, die konfiguriert sind, um das Projektionsbild auf der Arbeitsfläche in einer Bildlaufrichtung zu verschieben,
- ein Computerprogrammprodukt nach Anspruch 16,
- einen Speicher, der mindestens ein Referenzmuster umfasst, aus dem das Anzeigemuster bestimmbar ist, wobei das Referenzmuster eine Folge von Pixelzuständen umfasst,
wobei der Speicher eine Vielzahl von Referenzmustern (51, 52, 61, 62) aufweist.

## Claims

1. Method of manufacturing a product implemented by a system for manufacturing by stacking layers of material, said system comprising
- a lighting device (1) comprising a light source (11) and a mask (12) configured to transmit or to block the light emitted by the light source (11) according to a display pattern to create a projection image, said mask comprising an array of pixels able to take a passing state and a blocking state, the passing state resulting in a transmission of light towards the corresponding point of the projection image, the blocking state resulting in an absence of light transmission towards the corresponding point of the projection image, and the display pattern corresponding to the distribution of the states of said pixels
- a receptacle (3) arranged to contain a layer of material having a working surface (31) exposed to the projection image (4) emitted by the lighting device (1),
- movement means (2) for moving the projection image over the working surface (31) in a scrolling direction,
- a storage memory comprising at least one reference pattern (51, 52, 61, 62) from which is determined the display pattern, the reference pattern comprising a sequence of pixel states,
in which the display pattern corresponds to a used part of the reference pattern, and the display pattern is updated during the movement of the projection image (4) in the scrolling direction progressively with said movement of the projection image by a shifting of the used part of the reference pattern, the storage memory comprising a plurality of reference patterns, and the reference pattern from which is determined the display pattern of the mask is selected from among the plurality of reference patterns according to criteria relative to the movement of the projection image in the scrolling direction and according to temporal criteria, in which the reference pattern from which is determined the display pattern of the mask is selected from among the plurality of reference patterns at least according to temporal criteria, in which the display pattern is modified several times in the absence of movement of the projection image, **characterized in that** the movement profile of the projection image over the working surface in the scrolling direction comprises an initial part and a final part during which the projection image is fixed on the working surface, and **in that** the display pattern has an obturated zone of which the distribution over said mask:
- regresses in the direction of scrolling in the initial part, and/or
- progresses in the scrolling direction in the final part.

2. Method according to the preceding claim, in which the movement of the projection image (4) in the scrolling direction (x) takes place continuously.

3. Method according to any one of the preceding claims, in which the criteria relative to the movement of the projection image comprise distances travelled by the projection image (4) in the scrolling direction (x).

4. Method according to the preceding claim, in which the display pattern is determined from the same reference pattern in the course of a scrolling distance associated with said reference pattern.

5. Method according to the preceding claim, in which the scrolling distance associated with a reference pattern corresponds to a shifting of the display pattern corresponding to a number of pixels comprised between 2 and 100, and preferably comprised between 2 and 40, still more preferably comprised between 5 and 15.

6. Method according one of the two claims 4 or 5, in which the scrolling distances associated with different reference patterns are identical.

7. Method according to any one of the preceding claims, in which the reference pattern comprises a sequence of pixel states organized in rows corresponding to rows of the display pattern, and the used part of said reference pattern corresponds to the rows displayed by the display pattern, in which the used part of the reference pattern is addressed by means of a memory address pointer, in which the memory address of said pointer is shifted by a number of bits corresponding to the size of a row of the reference pattern during the updating of the display pattern from the same reference pattern, and by a number of bits different from the size of a row of the reference pattern on selection of a new reference pattern.

8. Method according to any one of the preceding claims, in which for each of the reference patterns, said reference pattern is constructed in advance on the basis of a target pattern, said target pattern corresponding to the pattern desired for the projection image, by applying to said target pattern a filter for inverse compensation of a deformation between the display pattern and the projection image for a given scrolling advancement.

9. Method according to the preceding claim, in which the reference pattern is associated with said scrolling advancement, and the display pattern is determined from said reference pattern when the advancement of the scrolling corresponds to said given scrolling advancement.

10. Method according to one of claims 8 or 9, comprising a prior step of measuring, by means of an imager onto which is projected the projection image (4), the deformation between the display pattern and the projection image by comparison between the display pattern and the projection image acquired by said imager for said given scrolling advancement.

11. Method according to the preceding claim, in which the frequency of change of reference pattern is determined by said comparison between the display pattern and the projection image (4) acquired by said imager.

12. A method according to one of the preceding claims, in which the reference pattern from which is determined the display pattern of the mask is selected from the plurality of reference patterns at least according to temporal criteria, and in which during the course of the movement of the projection image (4), the temporal criteria for projection comprise the elapse of a given time less than a time corresponding to a movement of the projection image over a distance corresponding to a half-pixel on the working surface.

13. Method according to the preceding claim, in which several reference patterns are used to determine the display pattern during said time less than a time corresponding to a movement of the projection image over a distance corresponding to a half-pixel over the working surface, and at least one of said reference patterns is a compensation pattern for compensating for the lack of homogeneity of the lighting by the light source, said compensation pattern having a spatial distribution of the states of the pixels which is **characterized by** a higher proportion of pixels in the blocking state at the center of said pattern than at its periphery.

14. Method according to one of claims 12 to 13, in which several reference patterns are used to determine the display pattern during said time less than a time corresponding to a movement of the projection image over a distance corresponding to a half-pixel over the working surface, and at least one of said reference patterns is a balancing pattern of which the pixels states are determined by the states of the pixels adjacent to said pixels in another of said reference patterns.

15. Method according to one of the preceding claims, in which several reference patterns are used to determine the display pattern in the course of part of the movement during which the projection image is fixed on the working surface, said reference patterns defining respective display patterns being distinguished from each other by a progressive shifting in the scrolling direction of the obturated area constituted by rows of pixels in the blocking state.

16. Computer program product comprising program code instructions recorded on a medium usable in a computer which lead the system according to claim 17 to perform the steps of the method according to any one of the preceding claims.

17. System for manufacturing by stacking layers of material, said system comprising
- a lighting device (1) comprising a light source (11) and a mask (12) configured to transmit or to block the light emitted by the light source (11) according to a display pattern to create a projection image (4), said mask comprising an array of pixels able to take a passing state and a blocking state, the passing state resulting in a transmission of light towards the corresponding point of the projection image, the blocking state resulting in an absence of light transmission towards the corresponding point of the projection image, and the display pattern corresponding to the distribution of the states of said pixels,
- a receptacle (3) arranged to contain a layer of material having a working surface (31) exposed to the projection image (4) emitted by the lighting device (1),
- movement means configured for moving the projection image over the working surface in a scrolling direction,
- a computer program product according to claim 16,
- a storage memory comprising at least one reference pattern from which may be determined the display pattern, the reference pattern comprising a sequence of pixel states, the storage memory comprising a plurality of reference patterns (51, 52, 61, 62).
